# EUROPÄISCHE PATENTSCHRIFT

(11) **EP 0 444 018 B1**
(45) Veröffentlichungstag und Bekanntmachung des Hinweises auf die Patenterteilung: **10.08.1994**
(21) Anmeldenummer: 91890033.3
(22) Anmeldetag: 19.02.1991
(51) Int. Cl.: F02M 35/10, F02F 1/42

(54) **Brennkraftmaschine mit zumindest zwei Einlassventilen je Motorzylinder**
Internal combustion engine comprising at least two inlet valves per cylinder
Moteur à combustion interne avec au moins deux soupapes d'admission par cylindre

(30) Priorität: 23.02.1990 AT 435/90
(43) Veröffentlichungstag der Anmeldung: 28.08.1991
(73) Patentinhaber: AVL Gesellschaft für Verbrennungskraftmaschinen und Messtechnik mbH.Prof.Dr.Dr.h.c. Hans List, 8020 Graz (AT)
(72) Erfinder: Fraidl, Günter-Karl, Dipl.-Ing. Dr., A-8054 Pirka/Graz (AT); Quissek, Friedrich, Dipl.-Ing. Dr., A-8071 Dörfla (AT); Fuchs, Hans Christian, A-8042 Graz (AT)
(74) Vertreter: Krause, Walter, Dr. Dipl.-Ing.

(56) Entgegenhaltungen:
- EP-A- 0 209 426
- DE-A- 2 853 576
- DE-A- 3 502 699
- DE-A- 3 718 083
- JP-A-60 108 529

## Beschreibung

Die Erfindung bezieht sich auf eine Brennkraftmaschine mit zumindest zwei Einlaßventilen je Motorzylinder, die im geschlossenen Zustand von einer normal auf die Zylinderachse stehenden Ebene gleich entfernt sind, und einem durch dachförmige Begrenzungsflächen begrenzten Brennraum im Zylinderkopf, wobei die Hauptströmungsrichtung der über die Einlaßventile in den Brennraum eingesaugten Teilströme mit der durch die Motorzylinderachsen einer Zylinderreihe bestimmten Ebene, der Symmetrieebene, je einen spitzen Winkel einschließen, wobei die Teilströme durch Einlaßöffnungen in den Brennraum einströmen, welche jeweils auf einer Seite einer die Zylinderachse beinhaltenden Normalebene auf Symmetrieebene liegen.

Bei einer Brennkraftmaschine der eingangs genannten Art ist es etwa aus der DE-A1 28 53 576 bekannt, die Ladungsbewegung unter bestimmten Motorbetriebszuständen durch Abschalten zumindest eines Einlaßventils zu erhöhen. Solche Ansaugssysteme weisen in typischer Weise einen geraden Ansaugkanal und einen dazu parallelen, schraubenförmigen oder gedrallten zweiten Ansaugkanal auf. Dabei kann durch Drosselung des zweiten Einlaßkanals unter bestimmten Betriebszuständen die Strömung des Kraftstoff-Luftgemisches durch den geraden Einlaßkanal vermindert bzw. unterbrochen werden, um damit eine zusätzliche Drallbewegung im Brennraum zu bewirken. Der zweite Einlaßkanal ist dabei so ausgebildet, daß die Teilströmung des zweiten Kanals die Teilströmung des ersten Kanals behindert und dadurch den durch den ersten Einlaßkanal erzeugten Drall verringert. Dies hat den Nachteil, daß Strömungsverluste auftreten, die einer Verbesserung des volumetrischen Wirkungsgrades entgegenstehen.

Die Erzeugung einer zusätzlichen Drallbewegung im Brennraum kann jedoch teilweise auch ohne spezielle asymmetrische Ausbildung der einzelnen Einlaßkanäle entweder durch ein Absperrorgan im betreffenden Einlaßkanal oder durch unterschiedliche Betätigung der Einlaßventile, wie z.B. in der EP-A1 0 321 033 beschrieben, erfolgen.

Vielfach werden die Haupteinströmkanäle verschlossen und die Einströmung erfolgt über einen kurz vor dem Einlaßventil in einen der Haupteinströmkanäle mündenden Zusatzkanal, siehe z.B. die DE-OS 37 18 083.

Vielfach bekannt ist auch eine asymmetrische Ausbildung der Einlaßkanäle, wobei jeweils ein Einlaßkanal"schraubenförmig", "gedrallt" oder mit einem "Wirbelendstück" ausgebildet ist. Derartige Kanäle bewirken, wie bekannt, ohne Beeinflußung durch den zweiten Einlaßkanal einen ausgeprägten Einlaßdrall, d.h. eine Drehbewegung der Ladung um eine zur Zylinderachse parallele Achse. Während bei einer solchen bekannten Anordnung durch Verschließen des geraden Ansaugkanals in der Teillast ein hohes Maß an Ladungsbewegung realisiert werden kann, ergeben sich bei hohen Luftdurchsätzen, z.B. bei Vollast oder hoher Motordrehzahl, selbst bei Öffnen des geraden Kanals, durch diese spiral- oder schraubenförmige Kanalausbildung deutlich geringere maximale Luftdurchsätze, als sie sich bei einer sonst üblichen vergleichbaren Kanalausbildung ergeben würden. Zusätzlich bewirkt die gedrallte Ausführung eines Einlaßkanals bei hohen Vollastdrehzahlen einen zu raschen Verbrennungsablauf, woraus Nachteile hinsichtlich des Verbrennungsgeräusches resultieren.

Allgemein bekannt ist es in diesem Zusammenhang, daß die Hauptströmungsrichtungen der über die Einlaßventile in den Brennraum gelangenden Teilströme zu der eingangs definierten Symmetrieebene, welche zur Kurbelwellenachse parallel verläuft, spitze Winkel einschließen, wie das z.B. aus der EP-A1 0 085 258 bekannt ist.

Zusätzlich ist es aus der EP-A2 0 321 313 bekannt, drei Einlaßventile je Motorzylinder symmetrisch zu einer die Zylinderachse enthaltenden Normalebene auf die vorhin definierte Symmetrieebene anzuordnen. Dabei weist der mittlere, in der Normalebene liegende Einlaßkanal einen anderen Neigungswinkel auf als die beiden äußeren Einlaßkanäle. Eine Beeinflussung der Rotation der Zylinderladung ist damit jedoch nicht möglich.

Der Erfindung liegt die Aufgabe zugrunde, diese Nachteile der bekannten Ausführungen zu vermeiden und insbesondere bei Teillast einen starken Drall der Ladung im Brennraum zu erreichen ohne jedoch die Ladungseinströmung bei Vollast infolge schlechterer Durchflußbeiwerte zu behindern und damit die Leistung des Motors zu verschlechtern.

Diese Aufgabe wird erfindungsgemäß dadurch gelöst, daß der Winkel zumindest eines Teilstromes auf einer Seite einer die Zylinderachse beinhaltenden Normalebene auf die Symmetrieebene um 10 - 40° größer ist als der Winkel zumindest eines entsprechenden Teilstromes auf der gegenüberliegenden Seite der Normalebene, wobei die Winkel der Teilströme zur Symmetrieebene durch die Formgebung der Einlaßkanäle zu den Einlaßventilen bestimmt sind, so daß sowohl eine Drallbewegung um eine zur Kurbelwelle parallele Achse, als auch eine Drallbewegung um eine zur Zylinderachse parallele Achse derart initiiert wird, daß eine gegenseitige Behinderung der Teilströme vermieden wird. Im Gegensatz zu den bekannten Systemen zur Erzeugung hoher Ladungsbewegung werden bei der Erfindung zwei auf gutes Luftdurchsatzverhalten ausgelegte Einlaßkanäle vorgesehen, die vor allem durch die spezielle Abstimmung ihrer Eintrittswinkel in den Brennraum ein erhöhtes Maß an Ladungsbewegung bewirken.

In weiterer Ausgestaltung der Erfindung ist vorgesehen, daß sich die Achse des Einlaßkanals zum ersten Einlaßventil zumindest knapp vor diesem Einlaßventil mit der Achse dieses Einlaßventils deckt oder dazu parallel ist und die Achse des Einlaßkanals zum zweiten Einlaßventil, zumindest knapp vor diesem zweiten Einlaßventil, mit der Achse dieses Einlaßventils einen spitzen Winkel einschließt. Dadurch mündet der erste Einlaßkanal, der sogenannte "Neutralkanal", unter vergleichsweise spitzem Winkel zur Symmetrieebene in den Brennraum, sodaß sich eine Haupteinströmrichtung des angesaugten Gemisch-Teilstromes ergibt, die nur einen geringen spitzen Winkel zur Symmetrieebene bildet. Die Kanalausbildung ist dabei so gewählt, daß eine möglichst gleichmäßige Beaufschlagung des gesamten Einlaßventiltellers durch die Einlaßströmung erfolgt und sich damit eine Haupteinströmrichtung etwa in Richtung der Einlaßventilachse ergibt. Der zweite Kanal, der sogenannte "Tangentialkanal", mündet unter einem um 10 - 40° größeren Winkel zur Symmetrieebene in den Brennraum und ist so ausgelegt, daß sich eine Hauptströmungsrichtung des angesaugten Gemischanteiles unter möglichst großem Winkel zur Symmetrieebene ergibt. Durch die spezielle Ausbildung des Einlaßkanals wird hierbei vor allem der den Auslaßventilen näherliegende Teil der Ventilteller von der Einlaßströmung beaufschlagt. Durch den flachen Eintrittswinkel des Einlaßkanals in den Brennraum und die zusätzliche asymmetrische Umlenkung am Ventilteller ergibt sich eine sehr flachliegende Haupteinströmrichtung.

Bei der vorliegenden Erfindung weist die durch den Neutralkanal unter geringem Winkel zur Symmetrieebene einströmende Masse einen wesentlich geringeren Impuls senkrecht zur Symmetrieachse auf, als die durch den Tangentialkanal einströmende Masse. Dadurch wird sowohl eine Drallbewegung um eine zur Kurbelwelle parallele Achse, als auch eine Drallbewegung um eine zur Zylinderachse parallele Achse initiiert. Diese erhöhte Ladungsbewegung führt vorallem unter Teillastbedingungen zu einem schnelleren Verbrennungsablauf, insbesondere zu einer deutlich verkürzten Entflammungsphase.

In weiterer Ausgestaltung der Erfindung können vorteilhaft die Einlaßkanäle sowohl im Zylinderkopf als auch im Ansaugkrümmer bis zu einem für mehrere Motorzylinder gemeinsamen Sammelbehälter vollkommen getrennt geführt sein.

In Ausgestaltung der Erfindung kann in jedem der beiden Einlaßkanäle ein Kraftstoffeinspritzventil angeordnet sein, wobei die Aufteilung der jeweils eingespritzten Kraftstoffmenge auf diese beiden Einspritzventile je nach Betriebsbedingungen des Motors (Motorlast, Motordrehzahl) variiert werden kann. Damit kann eine im Saugrohr eingeleitete Ladungsschichtung, d.h. schichtweise unterschiedliche Mischungsverhältnisse Kraftstoff/Luft im Brennraum, in einer den Verbrennungsablauf begünstigenden Form initiiert und bis zum Zündzeitpunkt aufrecht erhalten werden. Daraus resultiert sowohl eine höhere Verbrennungsstabilität, eine verbesserte Abmagerbarkeit, eine größere Toleranz gegenüber Abgasrückführung sowie daraus resultierende Verbesserungen bezüglich Kraftstoffverbrauch und Schadstoffemissionen.

Im Rahmen der Erfindung können auch die Einlaßkanäle bis zu einem für mehrere Motorzylinder gemeinsamen Sammelbehälter getrennt geführt sein, in der Nähe der Einlaßventile jedoch eine definierte Öffnung zwischen den beiden Ansaugkanälen vorhanden sein. Die Ladungsschichtung erfolgt hiebei dermaßen, daß durch Beibehaltung gleicher Einspritzmengen in den beiden Einlaßkanälen, jedoch Drosselung des Luftstromes im Neutralkanal vergleichsweise fettes Gemisch durch den Neutralkanal, hingegen vergleichsweise mageres Gemisch durch den Tangentialkanal angesaugt wird. Diese Drosselung erfolgt sowohl durch Verschließen des zum Neutralkanal führenden Ansaugrohres, ggf. unter Aufrechterhaltung einer definierten Leckluft und zusätzlich durch eine Querströmung aus dem Tangentialkanal durch die genau definierte Öffnung zwischen den beiden Kanälen.

Diese genau definierte Öffnung erlaubt im Rahmen der Erfindung zusätzlich die Kraftstoffversorgung beider Einlaßkanäle mit nur einem Einspritzventil, indem ein Einspritzventil je Motorzylinder symmetrisch zu den beiden Ansaugkanälen so angeordnet ist, daß die beiden Kraftstoffstrahlen dieses Einspritzventiles durch die definierte Öffnung hindurch auf die Einlaßventilteller gerichtet sind.

Durch die spezielle Einlaßkanalgestaltung und die dadurch initiierte Ladungsbewegung kann die Schichtung mit fettem Gemisch in Zündkerzennähe und magerem Gemisch in wandnahen Zonen auch dadurch erreicht werden, daß die Gemischbildung direkt im Brennraum, z.B. durch Hochdruckeinspritzung oder Kraftstoffeinblasung in den Brennraum, erfolgt. Die Schichtung kann bis zum Zündzeitpunkt aufrecht erhalten werden und führt so zu einer schnelleren und stabileren Verbrennung.

In weiterer Ausgestaltung der Erfindung kann ein Drosselorgan in jenem Einlaßkanal in Strömungsrichtung vor dem (den) Einspritzventil(en) angeordnet sein, aus dem der mit der Symmetrieebene einen kleineren Winkel bildende Teilstrom austritt und eine Drosselung des Ansaugluftstromes in diesem Einlaßkanal abhängig vom Motorbetriebszustand erfolgt. Es erfolgt damit eine Drosselung des Neutralkanals, der gerade Kanal (Tangentialkanal) bleibt unter allen Betriebsbedingungen geöffnet

Bei der bereits erwähnten bekannten asymmetrischen Gestaltung der Ansaugkanäle wird hingegen der gerade Ansaugkanal verschlossen und die zusätzliche drallförmige Ladungsbewegung wird primär durch die gedrallte Ausführung des offenen Einlaßkanals bewirkt. Bei einer solchen Anordnung können für die Verbrennung ungünstige Ladungsschichtungen bei Verwendung nur eines Einspritzventils pro Motorzylinder praktisch nicht verhindert werden.

In Verbindung mit der oben beschriebenen erfindungsgemäßen Ausbildung der Ansaugkanäle und entsprechender Anordnung der (des) Einspritzventile(s) wird neben der erhöhten Ladungsbewegung auch eine die Verbrennung begünstigende Ladungsschichtung initiiert und bis zum Zündzeitpunkt aufrecht erhalten.

Die Drosselung der durch den Neutralkanal einfließenden Luftmasse kann nicht nur auf die obenbeschriebene Weise durch ein Drosselorgan erfolgen, sondern es ist im Rahmen der Erfindung auch möglich, daß die Drosselung des Teilstromes der Ansaugluft, welcher mit der Symmetrieebene den kleineren Winkel bildet, durch eine vom Motorbetriebszustand abhängige Änderung der Einlaßventilhubkurve erfolgt. Dabei wird, wie ansich bekannt, diese Veränderung der Ventilhubkurve vorzugsweise durch frühes Schließen des Einlaßventiles bewirkt. Neben dem frühen Schließen des Einlaßventiles, z.B. durch elektrohydraulische Ansteuerung eines Zwischenelementes zwischen Einlaßventil und Nockenwelle, kann die Beeinflußung der Einlaßventilhubkurve aber auch durch andere an sich bekannte Mechanismen erfolgen, die z.B. auch den maximalen Einlaßventilhub variieren.

Die Erfindung wird nachfolgend anhand der Zeichnungen näher erläutert. Es zeigen in schematischer Darstellung:
- Fig. 1: einen Teilschnitt durch eine Brennkraftmaschinen gemäß der Erfindung,
- Fig. 2: hiezu eine Draufsicht,
- Fig. 3 und 4: je ein Detail zur Ausführung nach Fig. 1 und 2,
- Fig. 5 und 6: eine andere Ausführungsform gemäß der Erfindung im Längsschnitt durch einen Ansaugkanal bzw. in Draufsicht,
- Fig. 7: eine weitere Ausführung nach der Erfindung und
- Fig. 8: dazu den Grundriß,
- Fig. 9 und 10: je Ventilhubkurven zu einer Variante gemäß der Erfindung.

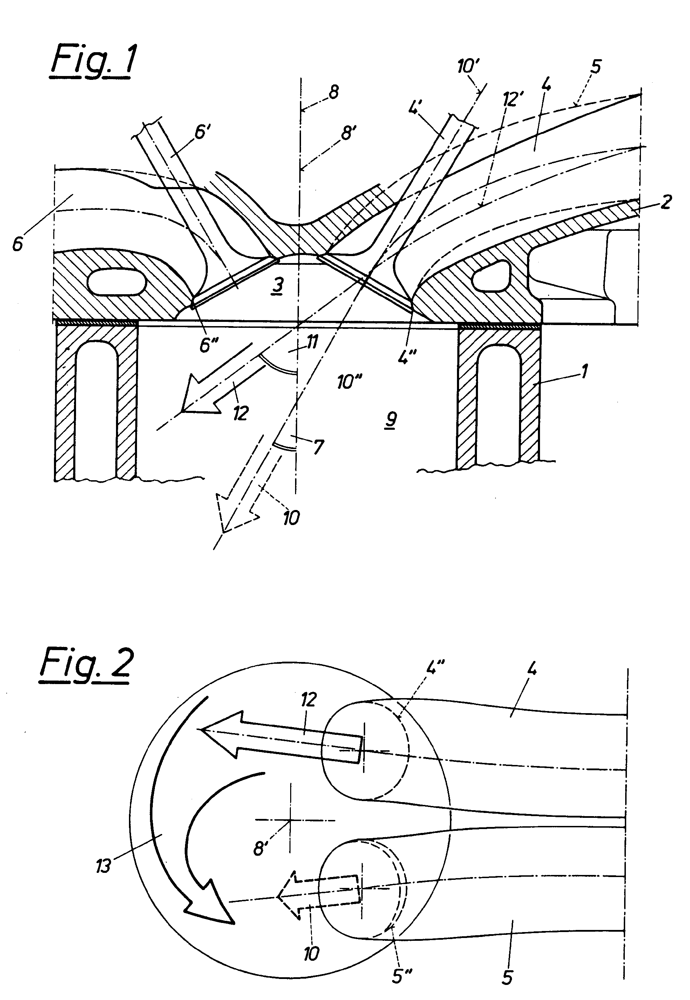

Bei der in den Fig. 1 und 2 dargestellten erfindungsgemäßen Brennkraftmaschine ist der Zylinderblock mit 1 und der auf diesem befestigte Zylinderkopf mit 2 bezeichnet. Im Zylinderkopf 2 befinden sich der dachförmig begrenzte Brennraum 3, sowie die Einlaßkanäle 4 und 5 und der Auslaßkanal 6 bzw. die Auslaßkanäle 6. Die zugehörigen Ein- bzw. Auslaßventile sind mit 4′ bzw. 6′ und die zugehörigen Querschnitte mit 4˝ bzw. 5˝ und 6˝ bezeichnet.

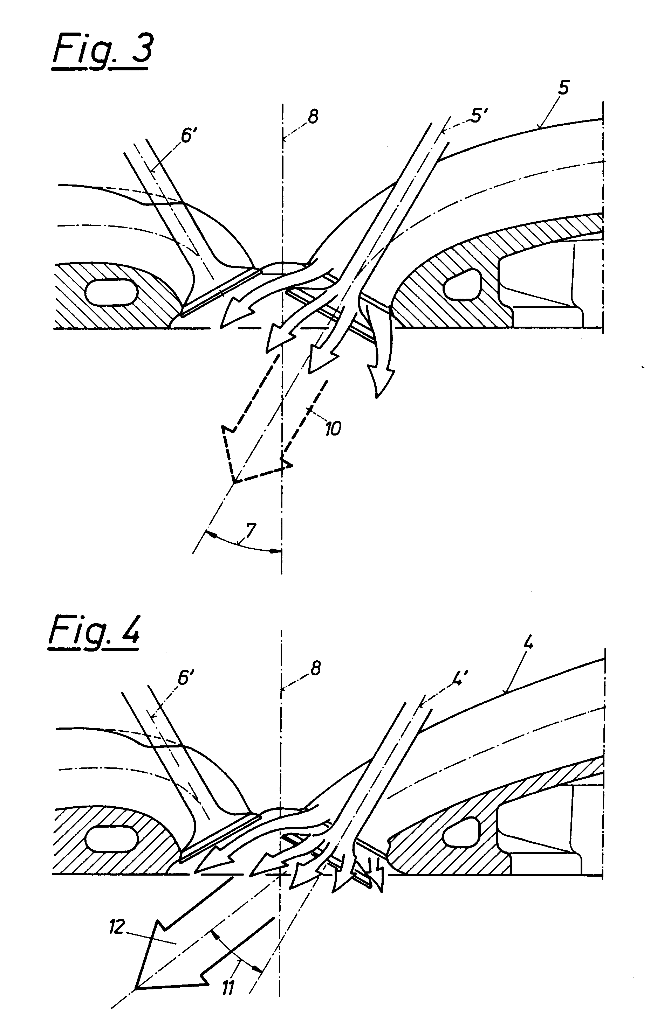

Der Einlaßkanal 5 mündet als sogenannter Neutralkanal unter einem vergleichsweise spitzen Winkel 7 zu der durch die Motorzylinderachsen 8′ einer Zylinderreihe bestimmten Symmetrieebene 8 in den Brennraum 3 bzw. in den Raum 9. Der Einlaßkanal 5 ist so ausgebildet, daß sich eine Hauptströmungsrichtung des angesaugten Gemisch-Teilstromes unter einem geringen Winkel 7 zur Symmetrieebene 8 ergibt. Dabei ist die Kanalausbildung so gewählt, daß eine möglichst gleichmäßige Beaufschlagung des gesamten Einlaßventiltellers durch die Einlaßströmung erfolgt - vergleiche Fig. 3 - und sich eine Hauptströmungsrichtung etwa in Richtung der Einlaßventilachse 10′ ergibt, welche durch den gestrichelt gezeichneten Pfeil 10 angedeutet ist. Der Einlaßkanal 5 ist in Fig. 1 gestrichelt eingezeichnet.

Der zweite Einlaßkanal 4, der sogenannte Tangentialkanal, mündet unter einem Winkel 11 zur Symmetrieebene 8 in den Brennraum 3 bzw. Motorraum 9, welcher Winkel um 10-40° größer ist als der Winkel 7. Dieser Winkel 11 ist so ausgelegt, daß sich eine Hauptströmungsrichtung des angesaugten Gemischanteiles unter möglichst großem Winkel zur Symmetrieebene ergibt, welche durch den voll ausgezogenen Pfeil 12 in Fig. 1 und 4 dargestellt ist. Durch die spezielle Ausbildung dieses Einlaßkanales 4 wird vor allem der den Auslaßventilen 6′ näherliegende Teil der Ventilteller von der Einlaßströmung beaufschlagt, wie in Fig. 4 veranschaulicht ist. Durch den flachen Eintrittswinkel des Einlaßkanals 4 in den Brennraum 3 bzw. Zylinderraum 9 und die zusätzliche stark asymmetrische Umlenkung am Ventilteller, wie in Fig. 4 dargestellt, ergibt sich eine sehr flach liegende Haupteinströmrichtung, wie durch den voll ausgezogenen Pfeil 12 veranschaulicht ist.

Wie in Fig. 2 dargestellt, liegen die beiden Einlaßkanäle 4 und 5 zu beiden Seiten einer Normalebene 8˝ auf die Symmetrieebene 8. Wesentlich für die Erfindung ist, daß der Winkel des Teilstroms 12 auf einer Seite der Normalebene 8˝ um 10 bis 40° größer ist als der Winkel 7 des Teilstromes 10 auf der gegenüberliegenden Seite der Normalebene 8˝.

Bei der vorliegenden Erfindung weist die unter geringem Winkel 7 zur Symmetrieebene 8 durch den Neutralkanal 5 einströmende Masse einen wesentlich geringeren Impuls senkrecht zur Symmetrieebene 8 auf, als die durch den Tangentialkanal 4 einströmende Masse. Dadurch wird sowohl eine Drallbewegung um eine zur Kurbelwelle parallele Achse, als auch eine Drallbewegung um eine zur Zylinderachse 8′ parallele Achse initiiert. Diese erhöhte Ladungsbewegung führt vor allem unter Teillastbedingungen zu einem schnelleren Verbrennungsablauf, insbesondere zur deutlich verkürzten Entflammungsphase.

Zusätzlich kann durch diese Ladungsbewegung eine in den Einlaßkanälen eingeleitete Ladungsschichtung mit unterschiedlichem Mischungsverhältnis Kraftstoff/Luft im Brennraum in einer den Verbrennungsablauf begünstigenden Form initiiert und bis zur Zündung aufrecht erhalten werden. Daraus resultiert sowohl eine höhere Verbrennungsstabilität, verbesserte Abmagerbarkeit und größere Toleranz gegenüber Hauptgasrückführung sowie daraus resultierenden Verbesserungen bezüglich Kraftstoffverbrauch und Schadstoffemissionen.

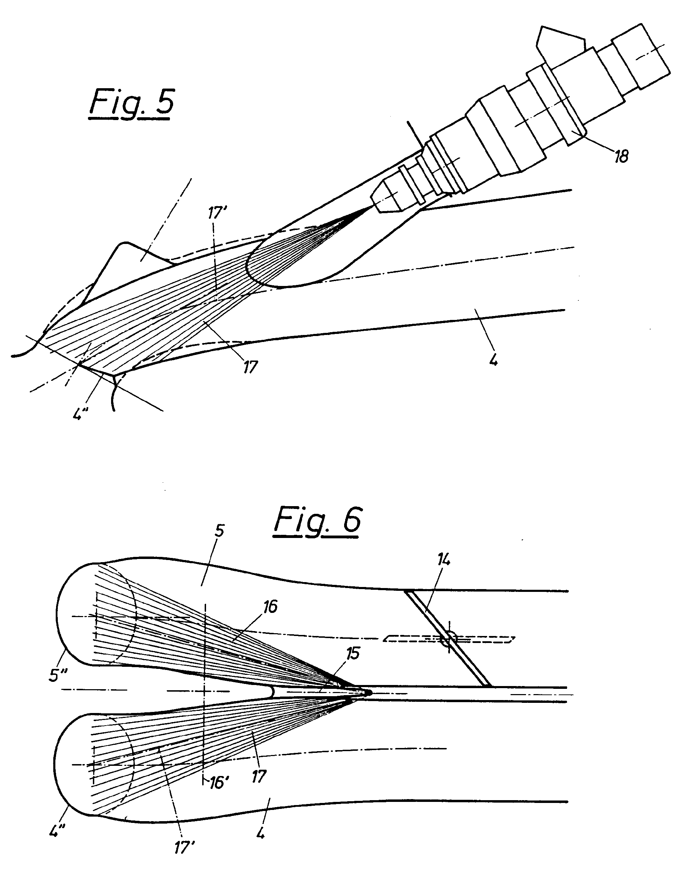

Beim Ausführungsbeispiel gemäß Fig. 5 und 6 befindet sich im Neutralkanal 5 eine Drosseleinrichtung in Form einer Drosselklappe 14, wogegen der Tangentialkanal 4 ständig offen bleibt. Zwischen dem Tangentialkanal 4 und dem Neutralkanal 5 befindet sich eine genau definierte Öffnung 15, durch welche die beiden Strahlen 16 und 17 der Einspritzdüse 18 hindurchtreten, wobei sie mit ihren Achsen 16′ bzw. 17′ gegen die Mittel der Ventil-Einlaßquerschnitte 5˝ bzw. 4˝ gerichtet sind. Durch Beibehaltung gleicher Einspritzmengen in den beiden Einlaßkanälen, jedoch Drosselung des Luftstromes im Neutralkanal 5 wird vergleichsweise fettes Gemisch durch den Neutralakanal 5 und vergleichsweise mageres Gemisch durch den Tangentialkanal 4 angesaugt. Dadurch entsteht ein entsprechende Ladungsschichtung, wobei das zündfähigere fettere Gemisch im Bereich der Zündkerze zu liegen kommt.

Die Drosselung im Neutralkanal 5 durch die Drosselklappe 14 erfolgt gegebenenfalls unter Aufrechterhaltung einer definierten Leckluft und zusätzlich durch eine Querströmung aus dem Tangentialkanal durch die genau definierte Öffnung 15. Durch die spezielle Einlaßkanalgestaltung kann die Schichtung mit fettem Gemisch in Zündkerzennähe und magerem Gemisch in wandnahen Zonen bis zum Zündzeitpunkt aufrecht erhalten werden.

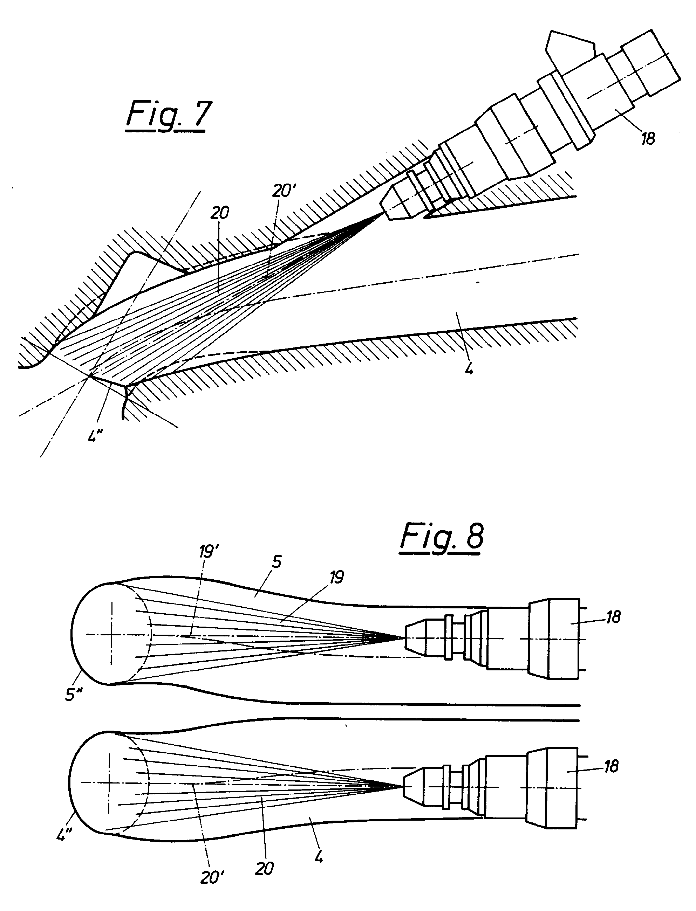

Die Ausführung nach Fig. 7 und 8 unterscheidet sich von jener nach den Fig. 5 und 6 dadurch, daß der Neutralkanal 5 und der Tangentialkanal 4 voneinander völlig getrennt geführt sind und je eine Einspritzdüse 18 aufweisen, deren Strahlen 19 bzw. 20 mit ihren Mittellinien 19′ bzw. 20′ gegen die Mittel der Ventil-Einlaßquerschnitte 5˝ bzw. 4˝ gerichtet sind. Durch Variation der durch die Düsen eingespritzten Kraftstoffmengen können beliebige Ladungsschichtungen erreicht werden.

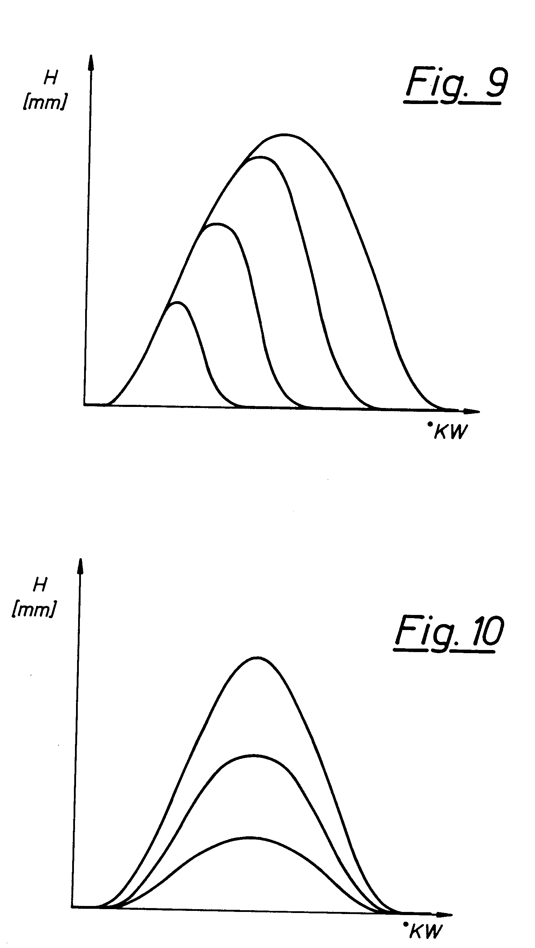

Anstelle der Drosselung der durch den Neutralkanal 5 einströmenden Luftmasse, kann nicht nur durch ein Drosselorgan im Neutralkanal erfolgen, sondern auch durch Veränderung der Ventilhubkurve. Diese Veränderung der Ventilhubkurve kann, wie an sich bekannt, vorzugsweise durch frühes Schließen des Einlaßventiles bewirkt werden, was z.B. durch elektrohydraulische Ansteuerung eines Zwischenelementes zwischen Einlaßventil und Nockenwwelle bewirkt werden kann. Die Wirkung einer derartigen Einrichtung ist in Fig. 9 dargestellt, wo die Ventilerhebung H über den Kurbelwinkel KW aufgetragen ist. Eine andere Möglichkeit besteht darin, den maximalen Einlaßventilhub H zu variieren, wie in Fig. 10 dargestellt.

## Patentansprüche

1. Brennkraftmaschine mit zumindest zwei Einlaßventilen je Motorzylinder, die im geschlossenen Zustand von einer normal auf die Zylinderachse (8′) stehenden Ebene gleich entfernt sind, und einem durch dachförmige Begrenzungsflächen begrenzten Brennraum (3) im Zylinderkopf (2), wobei die Hauptströmungsrichtungen der über die Einlaßventile (4′ ,5′) in den Brennraum (3) eingesaugten Teilströme (10, 12) mit der durch die Motorzylinderachsen (8′) einer Zylinderreihe bestimmten Ebene, der Symmetrieebene (8), je einen spitzen Winkel einschließen, wobei die Teilströme (10, 12) durch Einlaßöffnungen (4",5") in den Brennraum (3) einströmen, welche jeweils auf einer Seite einer die Zylinderachse (8′) beinhaltenden Normalebene (8") auf die Symmetrieebene (8) liegen **dadurch gekennzeichnet,** daß der Winkel (11) zumindest eines Teilstromes (12) auf einer Seite einer die Zylinderachse (8′) beinhaltenden Normalebene (8") auf die Symmetrieebene (8) um 10 - 40° größer ist als der Winkel (7) zumindest eines entsprechenden Teilstromes (10) auf der gegenüberliegenden Seite der Normalebene (8"), wobei die Winkel (7, 11) der Teilströme (10, 12) zur Symmetrieebene (8) durch die Formgebung der Einlaßkanäle (4, 5) zu den Einlaßventilen (4′, 5′) bestimmt sind, so daß sowohl eine Drallbewegung um eine zur Kurbelwelle parallele Achse, als auch eine Drallbewegung (13) um eine zur Zylinderachse (8′) parallele Achse derart initiiert wird, daß eine gegenseitige Behinderung der Teilströme vermieden wird.

2. Brennkraftmaschine nach Anspruch 1, **dadurch** **gekennzeich****net**, daß sich die Achse (10") des Einlaßkanals (5) zum ersten Einlaßventil (5′) zumindest knapp vor diesem Einlaßventil mit der Achse (10′) dieses Einlaßventile (5′) deckt oder dazu parallel ist und die Achse (12′) des Einlaßkanals (4) zum zweiten Einlaßventil (4′), zumindest knapp vor diesem zweiten Einlaßventile (4′), mit der Achse (10′) dieses Einlaßventils (4′) einen spitzen Winkel einschließt.

3. Brennkraftmaschine nach Anspruch 1 oder 2, **dadurch gekennzeichnet**, daß die Einlaßkanäle (4, 5) sowohl im Zylinderkopf (2) als auch im Ansaugkrümmer bis zu einem für mehrere Motorzylinder gemeinsamen Sammelbehälter vollkommen getrennt geführt sind.

4. Brennkraftmaschine nach eine der Ansprüche 1 bis 3, **dadurch** **gekennzeichnet**, daß in jedem der beiden Einlaßkanäle (4, 5) ein Kraftstoffeinspritzventil (18) angeordnet ist, wobei die Aufteilung der jeweils eingespritzten Kraftstoffmenge auf diese beiden Einspritzventile (18) je nach Betriebsbedingungen des Motors (Motorlast, Motordrehzahl) variiert werden kann.

5. Brennkraftmaschine nach Anspruch 1 oder 2, **dadurch gekennzeichnet**, daß die Einlaßkanäle (4, 5) bis zu einem für mehrere Motorzylinder gemeinsamen Sammelbehälter getrennt geführt sind, in der Nähe der Einlaßventile (4′, 5′) jedoch eine definierte Öffnung (15) zwischen den beiden Einlaßkanälen (4, 5) vorhanden ist.

6. Brennkraftmaschine nach Anspruch 5, **dadurch gekennzeichnet**, daß ein Einspritzventil (18) je Motorzylinder symmetrisch zu den beiden Ansaugkanälen (4, 5) so angeordnet ist, daß die beiden Kraftstoffstrahlen (16, 17) dieses Einspritzventiles (18) durch die definierte Öffnung (15) hindurch auf die Einlaßventilteller gerichtet sind.

7. Brennkraftmaschine nach einem der Ansprüche 1 bis 3, **dadurch gekennzeichnet**, daß die Gemischbildung direkt im Brennraum (3), z.B. durch Hochdruckeinspritzung oder Kraftstoffeinblasung in den Brennraum, erfolgt.

8. Brennkraftmaschine nach einem der Ansprüche 1 bis 7, **dadurch gekennzeichnet**, daß ein Drosselorgan (14) in jenem Einlaßkanal (5) in Strömungsrichtung vor dem (den) Einspritzventil(en) (18) angeordnet ist, aus dem der mit der Symmetrieebene (8) einen kleineren Winkel bildende Teilstrom austritt und eine Drosselung des Ansaugluftstromes in diesem Einlaßkanal (5) abhängig vom Motorbetriebszustand erfolgt.

9. Brennkraftmaschine nach Anspruch 7, **dadurch gekennzeichnet**, daß die Drosselung des Teilstromes (10) der Ansaugluft, welcher mit der Symmetrieebene (8) den kleineren Winkel bildet, durch eine vom Motorbetriebszustand abhängige Änderung der Einlaßventilhubkurve des Einlaßventils (5′) erfolgt.

## Claims

1. An internal combustion engine with at least two inlet valves for each engine cylinder, which in their closed position are equidistant from a plane normal to the cylinder axis (8′), and with a combustion chamber (3) defined by roof-shaped boundary surfaces in the cylinder head (2), the main flow directions of the partial streams (10, 12) admitted into the combustion chamber (3) through the inlet valves (4′, 5′) each forming an acute angle with the plane defined by the cylinder axes (8′) of a cylinder bank, i.e., the symmetry plane (8), and the partial streams (10, 12) entering the combustion chamber (3) through inlets (4", 5") located one on either side of a plane (8") going through the cylinder axis (8′) and being normal to the symmetry plane (8), **characterized in that** the angle (11) of at least one partial stream (12) on one side of a plane (8") going through the cylinder axis (8′) and being normal to the symmetry plane (8) is larger by 10 to 40° than the angle (7) of at least one corresponding partial stream (10) on the other side of said normal plane (8"), the angles (7, 11) of the partial streams (10, 12) relative to the symmetry plane (8) being determined by the configuration of the intake passages (4, 5) leading towards the inlet valves (4′, 5′), such that both a rotary motion about an axis parallel to the crankshaft and a rotary motion (13) about an axis parallel to the cylinder axis (8′) is initiated in such a way as to prevent the partial streams from interfering with each other.

2. An internal combustion engine according to claim 1, **characterized in that** the axis (10") of the intake passage (5) towards the first inlet valve (5′) coincides with the axis (10′) of the said inlet valve (5′), at least immediately before this inlet valve (5′), or is parallel thereto, and that the axis (12′) of the intake passage (4) towards the second inlet valve (4′) forms an acute angle with the axis (10′) of the said inlet valve (4′), at least immediately before this second inlet valve (4′).

3. An internal combustion engine according to claim 1 or 2, **characterized in that** the intake passages (4, 5) run separately both in the cylinder head (2) and in the intake manifold until they open into a joint manifold serving several engine cylinders.

4. An internal combustion engine according to any of claims 1 to 3, **characterized in that** a fuel injection valve (18) is provided in each of the two intake passages (4, 5), the respective amount of fuel to be injected by each valve (18) varying with the specific operating conditions of the engine (load, speed).

5. An internal combustion engine according to claim 1 or 2, **characterized in that** the intake passages (4, 5) run separately until they open into a joint manifold serving several engine cylinders, while a defined opening (15) is provided between the two intake passages (4, 5) in the vicinity of the inlet valves (4′, 5′).

6. An internal combustion engine according to claim 5, **characterized in that** one injection valve (18) per engine cylinder is arranged symmetrically to the two intake passages (4, 5) in such a way that the two fuel jets (16, 17) of this injection valve (18) are directed towards the disks of the inlet valves through the defined opening (15).

7. An internal combustion engine according to any of claims 1 to 3, **characterized in that** mixture formation takes place in the combustion chamber (3) itself, for instance, by high-pressure airless injection or fuel air injection into the combustion chamber.

8. An internal combustion engine according to any of claims 1 to 7, **characterized in that** a throttle element (14) is provided in flow direction before the injection valve(s) (18) in that intake passage (5) from which the partial stream forming the smaller angle with the symmetry plane (8) emerges and in which the stream of intake air is throttled in correspondence with the operational state of the engine.

9. An internal combustion engine according to claim 7, **characterized in that** throttling of the partial stream (10) of intake air forming the smaller angle with the symmetry plane (8) is effected by a change in the lift characteristic of the inlet valve (5′) in correspondence with the operational state of the engine.

## Revendications

1. Moteur à combustion interne avec au moins deux soupapes d'admission pour chaque cylindre ; du moteur qui en position fermée sont éloignées à la même distance d'un plan se trouvant perpendiculaire à l'axe du cylindre (8′) et avec une chambre de combustion (5˝) limitée par des surfaces de délimitation en forme de toit dans la culasse (2), moteur dans lequel les directions d'écoulement principales des flux partiels (10, 12) aspirés par les soupapes d'admission (4′, 5′) dans la chambre de combustion (3) forment un angle aigu respectif avec le plan déterminé par les axes (8˝) d'une rangée de cylindres, le plan de symétrie (8), les flux partiels (10, 12) entrant à travers les orifices d'admission (4˝, 5˝) dans la chambre de combustion (3), qui se trouvent respectivement sur un côté d'un plan perpendiculaire (8˝) contenant l'axe du cylindre (8′) par rapport au plan de symétrie (8), moteur à combustion interne caractérisé en ce que l'angle (11) d'au moins un flux partiel (12) sur un côté d'un plan standard (8˝) contenant l'axe du cylindre (8′) est plus grand par rapport au plan de symétrie (8) de 10° à 40° que l'angle (7) d'au moins un flux partiel (10) correspondant par rapport au côté opposé du plan perpendiculaire (8˝), les angles (7, 11) des flux partiels (10, 12) par rapport , au plan de symétrie (8) étant déterminés par la forme des canaux d'admission (4, 5) allant aux soupapes d'admission (4′, 5′), de telle sorte que l'on initie aussi bien un mouvement de torsion autour d'un axe parallèle à l'arbre du vilebrequin qu'un mouvement de torsion (13) aussi autour d'une axe parallèle à l'axe du cylindre (8′), de telle manière que l'on évite une gêne réciproque des flux partiels.

2. Moteur à combustion interne selon la revendication 1, caractérisé en ce que l'axe (10˝) du canal d'admission (5) allant à la premiere soupape d'admission (5′) coïncide du moins peu avant cette soupape d'admission avec l'axe (1, D′) de cette soupape d'admission (5′) ou est parallèle à celui-ci et que l'axe (12′) du canal d'admission (4) allant à la deuxième soupape d'admission (4′) , du moins peu avant cette deuxième soupape d'admission(4′) forme avec l'axe (10′) de cette soupape d'admission (4′) un angle aigu.

3. Moteur à combustion interne selon la revendication 1 ou 2, caractérisé en ce que les canaux d'admission (4, 5) aussi bien dans la culasse (2) que dans la pipe d'admission aussi sont construits de façon complètement séparés jusqu'au réservoir collecteur commun à plusieurs cylindres du moteur.

4. Moteur à combustion interne selon l'une des revendication 1 à 3 caractérisé en ce que dans chacun des deux canaux d'admission (4, 5) est disposée une soupape d'injection de carburant (18), la répartition des quantités de carburant respectivement injectées par ces deux soupapes d'injection (18) pouvant être modulée selon les conditions de fonctionnement du moteur (charge du moteur, vitesse de rotation)

5. Moteur à combustion interne selon la revendication 1 ou 2, caractérisé en ce que les canaux d'admission (4, 5) sont construits de façon séparée jusqu'à un réservoir, collecteur commun à plusieurs cylindres du moteur, mais qu'il y a à proximité des soupapes d'admission (4′, 5′) un orifice défini (15) entre les deux canaux d'admission (4, 5).

6. Moteur à combustion selon la revendication 5, caractérisé en ce qu'une soupape d'injection (18) pour chaque cylindre du moteur est disposée symétriquement par rapport aux deux canaux d'admission (4, 5) de telle façon que les pots de carburant (16, 17) de cette soupape d'injection (18) soient dirigés à travers l'orifice défini (15) sur les têtes des soupapes d'admission.

7. Moteur à combustion interne selon l'une des revendications 1 a 3, caractérisé en ce que la formation du mélange se produit directement dans la chambre de combustion (3), par exemple par injection à haute pression ou par insufflation de carburant dans la chambre de combustion.

8. Moteur à combustion interne selon l'une des revendications 1 à 7, caractérisé en ce qu'un organe d'étranglement (14) est disposé dans le sens de l'écoulement dans chaque signal d'admission (5) avant la (les) soupape(s) d'admission (18), à partir de laquelle soit le flux partiel formant un angle plus petit avec le plan de symétrie (8) et en ce qu'il se produit un étranglement du courant d'air aspiré dans le canal d'admission (5) en fonction de l'état de marche du moteur.

9. Moteur à combustion interne selon la revendication 7, caractérisé en ce que l'étranglement du flux partiel (10) d'air aspiré, qui forme l'angle plus petit avec le plan de symétrie (8) résulte d'une variante de la courbe de soulèvement de la soupape d'admission (5′) qui dépend de l'état de marche du moteur.
